# EUROPEAN PATENT SPECIFICATION

(11) **EP 1 836 705 B1**
(45) Date of publication and mention of the grant of the patent: **16.05.2012**
(21) Application number: 06700079.4
(22) Date of filing: 12.01.2006
(51) Int. Cl.: G11B 27/11, G11B 27/034

(54) **BINDING AND REPRODUCING DATA PRERECORDED ON AN OPTICAL STORAGE MEDIUM SUCH AS BLU-RAY ALONG WITH DOWNLOADED DATA**
VERBINDEN UND GEMEINSAME WIEDERGABE VON AUF EINEM OPTISCHEN SPEICHERMEDIUM WIE BLU-RAY VORAUFGEZEICHNETEN DATEN UND VON HERUNTERGELADENEN DATEN
COMBINAISON ET REPRODUCTION SIMULTANEE DE DONNEES PRÉENREGISTREES SUR UN SUPPORT DE STOCKAGE DE TYPE BLU-RAY ET DE DONNEES TELECHARGEES

(30) Priority: 12.01.2005 KR 20050003007; 11.06.2005 KR 20050050142
(43) Date of publication of application: 26.09.2007
(73) Proprietor: Samsung Electronics Co., Ltd., Gyeonggi-do 442-742 (KR)
(72) Inventor: JUNG, Kil-soo, 104-1401 Namsuwon Doosan Apt., Gyeonggi-do 445-986 (KR); PARK, Sung-wook, 4-1103 Mapo Hyundai Apt., Seoul 121-761 (KR); KIM, Kwang-min, 105-504 Gwanak Byucksan Blooming Apt., Seoul 151-778 (KR)
(74) Representative: Grootscholten, Johannes A.M.
(86) International application number: PCT/KR2006/000123
(87) International publication number: WO 2006/075875

(56) References cited:
- EP-A2- 1 187 423
- WO-A1-01/98920
- WO-A1-03/085928
- WO-A1-2006/073247
- US-A1- 2002 194 618
- US-A1- 2003 215 224
- US-A1- 2004 177 385
- US-B1- 6 715 126
- BLU-RAY DISC FOUNDERS: "White paper, Blu-ray Disc Format: General"[Online] 1 August 2004 (2004-08-01), pages 1-37, XP002547994 Retrieved from the Internet: URL:http://www.blu-raydisc.com/Assets/Down loadablefile/general_bluraydiscformat-1526 3.pdf> [retrieved on 2009-09-29]
- BLU-RAY DISC FOUNDERS: "White paper Blu-ray Disc Format. 2.A: Logical and audio visual application format specifications for BD-RE" [Online] 1 August 2004 (2004-08-01), , XP002480404 http://www.blurayjukebox.com/pdfs/2a_bdre_ logicalaudiovisual-12838.pdf Retrieved from the Internet: URL:http://wwww.hi-def.ru/file_download/5> [retrieved on 2008-05-15] * abstract; figure 3.1.8.2 *
- BD FOUNDERS VIA SC 29 SECRETARIAT: "Liaison Statement from Blu Ray Disk Founders" 14 July 2004 (2004-07-14), JOINT VIDEO TEAM (JVT) OF ISO/IEC MPEG & ITU-T VCEG(ISO/IEC JTC1/SC29/WG11 AND ITU-T SG16 Q6), XX, XX , XP030039895 * the whole document *
- BLU-RAY DISC FOUNDERS: "White paper Blu-Ray Disc Format : 2.B Audio Visual Application format specifications for BD-ROM", INTERNET CITATION, August 2004 (2004-08), XP002315435, Retrieved from the Internet: URL:http://www.blu-raydisc.com/assets/down loadablefile/2b_bdrom_audiovisu alapplication-12841.pdf [retrieved on 2005-01-23]

## Description

### Technical Field

The present invention relates to reproduction of multimedia content stored in a storage medium, and more particularly, to a method and apparatus for reproducing data recorded on a storage medium along with data downloaded via a network.

### Background Art

In a storage medium, such as a Blu ray disc™ (BD) a multimedia content, e.g., audiovisual (AV) data, which contains video, audio and/or subtitles and is compression-encoded according to conventional standards for digital and audio compression, such as a MPEG (Motion Picture Experts Group) standard, is recorded. Also, additional information specifying the encoding characteristics of AV data or an order in which the AV data is reproduced, is further stored in the storage medium.

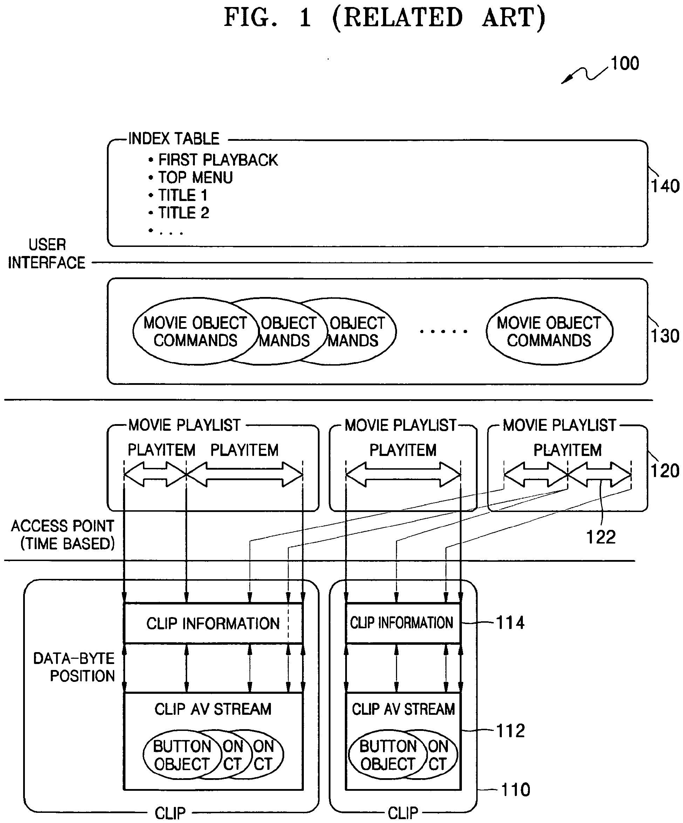

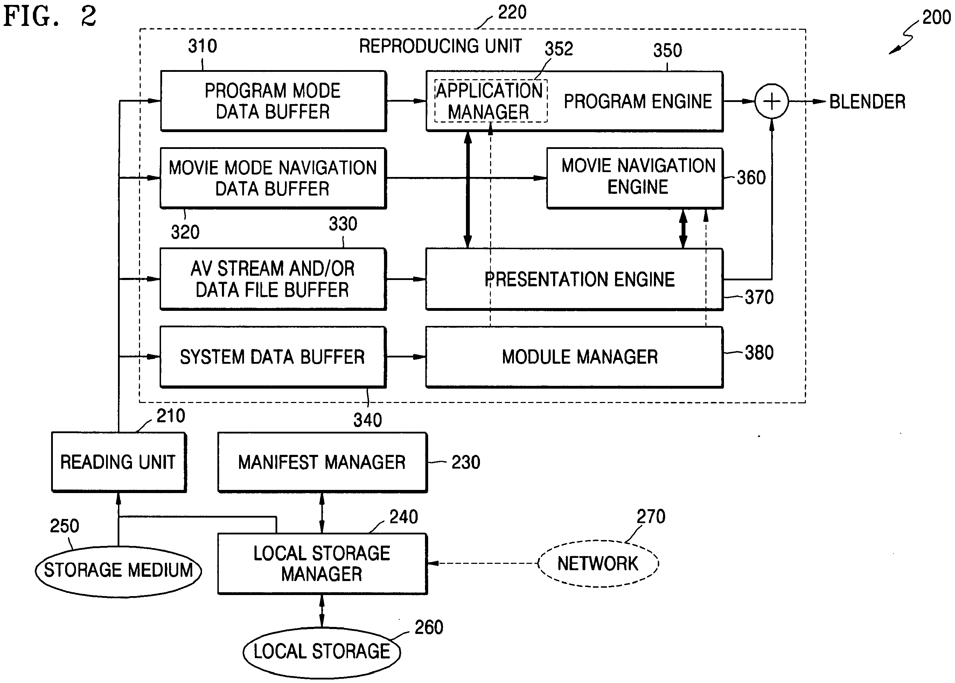

FIG. 1 illustrates an example data structure of multimedia content (AV data) recorded on a storage medium, such as a Blu-ray disc™. Referring to FIG. 1, a storage medium (such as the medium 250 shown, for example, in FIG. 2) is typically formed with multiple layers in order to manage a structure of AV data recorded thereon. The data structure 100 includes one or more clips 110 that are recording units of a multimedia content (AV data); one or more PlayLists 120 that are reproducing units of a multimedia content (AV data); move objects 130 including navigation commands that are used to reproduce a multimedia content (AV data); and an index table 140 that is used to specify a movie object to be first reproduced and titles of movie objects 130.

The clips 110 are implemented as one object which includes a clip AV stream 112 for an AV data stream for a high picture quality movie and clip information 114 for attributes corresponding to the AV data stream. For example, the AV data stream may be compressed according to a MPEG standard. However, such clips 110 need not require the AV data stream 112 to be compressed in all aspects of the present invention. In addition, the clip information 114 may include audio/video properties of the AV data stream 112, an entry point map in which information regarding a location of a randomly accessible entry point is recorded in units of a predetermined section and the like.

Each PlayList 120 includes a PlayList mark composed of marks which indicate the positions of clips 110 corresponding to the PlayList 120. Each PlayList 120 also includes a set of reproduction intervals of these clips 110, and each reproduction interval is referred to as a PlayItem 122. Hence, AV data can be reproduced in units of PlayLists 120 and in an order of PlayItems 122 listed in a PlayList 120.

The movie object 130 is formed with navigation command programs, and these navigation commands start reproduction of a PlayList 120, switch between movie objects 130, or manage reproduction of a PlayList 120 according to preference of a user.

The index table 140 is a table at the top layer of the storage medium to define a plurality of titles and menus, and includes start location information of all titles and menus such that a title or menu selected by a user operation, such as title search or menu call, can be reproduced. The index table 140 also includes start location information of a title or menu that is automatically reproduced first when a storage medium is placed on a reproducing apparatus.

However, it is difficult to add new content into the data structure of such a multimedia content, or to update such a content within the data structure as shown in FIG. 1. Accordingly, there is a growing need for a new technique and method of downloading new content from an external database, via a network, and reproducing such new content together with AV data previously recorded on a storage medium.

Documents US2003/0215224 and US2004/0177385 concern an interactive-DVD, a precursor to the Blu-Ray Disc™.

It defines downloading additional data from the Internet in a temporary storage and playing it concurrently with the disc content.

Document XP002315435 "Blu-ray Disc format white paper" concerns Blu-ray Disc™(BD) format, features and applications. It defines a method and system for downloading data into local storage, comprising the combined playback from local storage with a video from a Blu-ray Disc, binding scheme for ON/OFF disc content, BD directory structure, merged file system, shared resources between all discs and copy-protection/authentication schemes.

### Disclosure of Invention

### Technical Solution

The invention is as defined by the appended claims.

The following represents brief descriptions of the drawings, wherein:

FIG. 1 illustrates an example data structure of a multimedia content (AV data) recorded on a typical storage medium, such as a Blu-ray disc™ (BD;

FIG. 2 is a block diagram of an example reproducing apparatus according to an embodiment of the present invention;

FIG. 3 is a diagram of an example directory structure of a storage medium according to an embodiment of the present invention;

FIG. 4 is a diagram of an example binding unit for binding content stored in a storage medium with content downloaded, via a network, according to an embodiment of the present invention;

FIGS. 5A and 5B are reference diagrams illustrating a process of moving a downloaded content to a binding unit region of a local storage according to an embodiment of the present invention;

FIG. 6 is a reference diagram illustrating a process of producing a virtual package by binding content recorded on a storage medium with a downloaded content, according to an embodiment of the present invention;

FIG. 7 is a diagram of a manifest file for producing a virtual package according to an embodiment of the present invention;

FIG. 8 is a diagram of a progressive PlayList for downloading and reproducing a part of an audio-visual (AV) stream file according to an embodiment of the present invention;

FIG. 9 is a diagram of a manifest file for reproducing a progressive PlayList according to an embodiment of the present invention;

FIG. 10 is a diagram of a binding unit update process using a progressive PlayList according to an embodiment of the present invention;

FIG. 11 is a diagram of a binding unit update process using a progressive PlayList according to another embodiment of the present invention;

FIG. 12 is a diagram illustrating a problem of a binding unit update process using a progressive PlayList according to an embodiment of the present invention;

FIG. 13 is a diagram of a manifest file for solving the problem of the binding unit update process, according to another embodiment of the present invention; and

FIG. is is a flowchart of a method of reproducing content according to an embodiment of the present invention.

### Best Mode

In accordance with an aspect of the present invention, there is provided a method of reproducing content stored in a storage medium. Such a method comprises producing a virtual package by binding the content stored in the storage medium with content downloaded, via a network, based on predetermined binding information, and reproducing the stored content together with the downloaded content using the virtual package.

The virtual package can be produced by updating a predetermined binding unit stored in a local storage by using the downloaded content, prior to the production of the virtual package.

The binding unit may comprise the downloaded content and binding information regarding the downloaded content, and the file and directory structures of the binding unit may be the same as or similar to data structures of the stored content.

The binding information may be downloaded together with the downloaded content, via the network. The binding information may be a manifest file containing information for storing the binding unit in the local storage and for verifying the binding unit.

In order to identify the binding unit, the binding information may comprise a studio identifier and/or a storage medium identifier. The binding information may comprise directory information for storing the downloaded content in specific directories of the local storage.

The binding information may further comprise an identifier for identifying a title unit or a content unit in order that the downloaded content is divided in the title units or the content units for content management.

The binding information may further comprise information about usage of the title units or the content units. The binding information may further comprise information about all of data files for the title unit or the content unit.

The information about all of the data files may specify names, sizes, or versions of the data files, or all of the names, sizes, and versions of the data files.

The binding information may further comprise information indicating whether a progressive function is to be allowed to update the binding unit and produce the virtual package, even if the downloaded content does not include stream files.

When the progressive function is allowed, the binding information may further comprise information indicating whether a stream file referred to by a PlayList is stored in the storage medium or a binding unit region of the local storage.

When the progressive function is allowed, a user's operation mask may be allocated in order not to allow a trick play function via a user interface.

In accordance with another aspect of the present invention, there is provided a storage medium comprising a multimedia content; and a Java™ application, for downloading, producing a virtual package by binding the multimedia content with content downloaded via a network, based on predetermined binding information.

The Java™ application for downloading may comprise an application program interface, via which a predetermined binding unit stored in a local storage is updated using the downloaded content, prior to producing of the virtual package.

In accordance with yet another aspect of the present invention, there is provided an apparatus for reproducing content stored in a storage medium. Such an apparatus comprises a manifest manager for producing a virtual package by binding the stored content with content downloaded, via a network, based on predetermined binding information; and a module manager for controlling the stored content to be reproduced together with the downloaded content by using the virtual package.

The manifest manager may update a predetermined binding unit stored in a local storage by using the downloaded content, prior to the production of the virtual package.

The manifest manager may allow a progressive function to update the binding unit and produce the virtual package, even if the downloaded content does not contain stream files.

In addition to the example embodiments and aspects as described above, further aspects and embodiments of the present invention will be apparent by reference to the drawings and by study of the following descriptions.

### Mode for Invention

Reference will now be made in detail to the present embodiments of the present invention, examples of which are illustrated in the accompanying drawings, wherein like reference numerals refer to the like elements throughout. The embodiments are described below in order to explain the present invention by referring to the figures.

A reproducing apparatus according to the present invention binds content recorded on a storage medium with content downloaded, via a network, such that the stored content and the downloaded content can be recognized as if they were stored in a virtual information storage medium. Hereinafter, the virtual information storage medium will be referred to as virtual package', and a file system for a volume structure of the virtual information storage medium will be referred to as a 'virtual file system.'

The virtual package indicates a virtual storage medium obtained by binding a disc package, which is a bundle of all of contents recorded on a storage medium, with a binding unit that is downloaded, via a network, and stored in a local storage to form a structure similar to a volume structure of the storage medium, based on binding information.

A virtual package according to the present invention may be manufactured as follows. First, the directory structures and files of content stored on a storage medium and a local storage are combined to produce a virtual package in a real data storage region in a reproducing apparatus, and the virtual package is stored in a task memory of the reproducing apparatus. Second, a virtual package is produced to contain only information regarding links, via which files stored in the storage medium and a local storage are read, and stored in the task memory in the reproducing apparatus.

Turning now to FIG. 2, a block diagram of an example reproducing apparatus according to an embodiment of the present invention is illustrated. Referring to FIG. 2, the reproducing apparatus 200 includes a reading unit 210, a reproducing unit 220, a manifest manager 230, and a local storage manager 240 which manages the download of content from an external server, via a network 270, into a local storage 260 and the adding of downloaded content into content recorded on a storage medium 250, such as a blu-ray disc (BD). The reading unit 210 reads content (AV data) from the storage medium 250. The reproducing unit 220 decodes and reproduces the content (AV data).

In particular, the reproducing unit 20 includes different types of buffers, such as a program mode data buffer 310, a movie mode navigation buffer 320, an AV stream and/or data file buffer 330, a system data buffer 340, to store different type of content reproduced from the storage medium 250, and corresponding engines, such as a program engine 350, a movie navigation engine 360, and a presentation engine 370 to drive different types of content reproduced from the storage medium 250 for content reproduction. In addition, an application manager 352 may be included in the program engine 350 to manage different types of program mode data reproduced from the storage medium 250. A module manager 380 may also be included to control content recorded on the storage medium 250 to be reproduced together with content downloaded, via a network 270.

More specifically, the manifest manager 30 produces a virtual package by binding the recorded content with the downloaded content, based on binding information which will later be described. The manifest manager 30 may update a predetermined binding unit stored in a local storage 260 by using the downloaded content, prior to reproduction of the virtual package. Further, the manifest manager 30 may allow a progressive function for updating the binding unit and producing a virtual package even when the downloaded content does not contain stream files.

In addition, the module manager 30 controls the reproducing unit 20 to reproduce the content stored in the storage medium 250 along with the downloaded content, via the network 270, using the produced virtual package.

Other items such as a search unit and a user interface are not shown, but can be incorporated to enable a user, via a user interface, to search for one or more scenes that match a search keyword and to provide a visual display of search results.

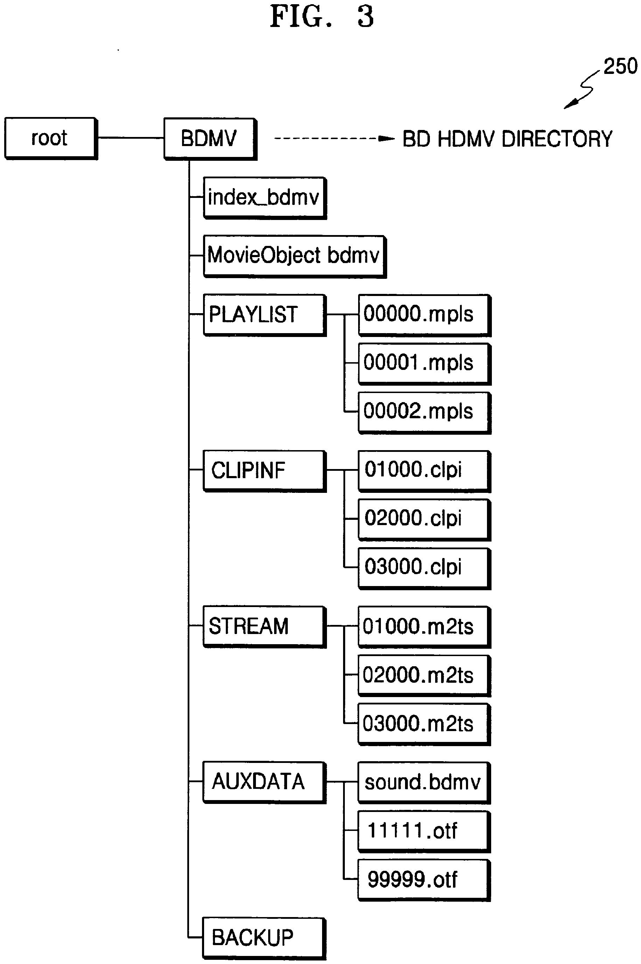

FIG. 3 is a diagram of an example directory structure of a storage medium according to an embodiment of the present invention. In detail, FIG. 3 illustrates the directory structure of multimedia content recorded a storage medium 250, as shown, for example, in FIG. 2. Referring to FIG. 3, an index table is recorded in an index.bdmv file, a movie object is recorded in a MovieObject.bdmv file, each PlayList is recorded in a xxxxx.mpls file in a PLAYLIST directory, each clip information is recorded in a xxxxx.clpi file in a CLIPINF directory, each clip AV stream is recorded in a xxxxx.m2ts file in a STREAM directory, and other data is recorded in files in an AUXDATA directory. Multimedia content, having a directory structure as illustrated in FIG. 3, which is stored in a storage medium 250, is referred to as a disc package.

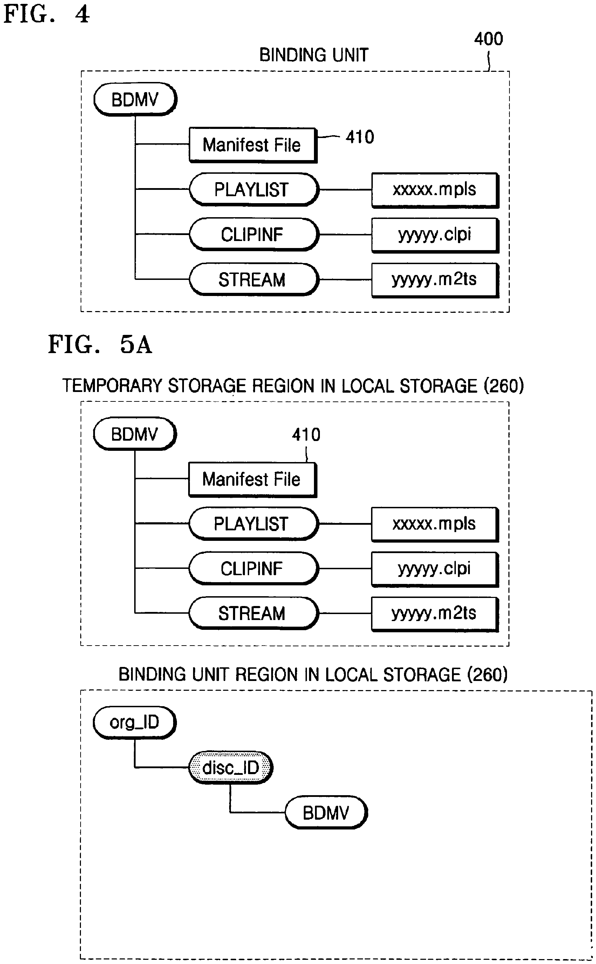

FIG. 4 is a diagram of an example binding unit for binding content stored in a storage medium with content downloaded, via a network, according to an embodiment of the present invention. Referring to FIG. 4, the binding unit 400 includes a manifest file 410 as binding information, and content files to be added into or substituted for the stored content. The binding unit 400 is a unit for storing the downloaded content, and is combined with a disc package, such as shown in FIG. 3, which is stored in a storage medium 250, as shown, for example, FIG. 2. As a result of the combination, a virtual package is produced and the stored content and the downloaded content can be recognized as if they were originally recorded on a storage medium 250. Unlike the disc package, the binding unit is not a complete unit for data reproduction, and therefore, cannot be reproduced independently, but contains content which to be added into or be substituted for the disc package. For convenience of management, one binding unit may exist for each storage medium.

That is, the binding unit 400 may contain the downloaded content and binding information therefor, and have files and a directory structure whose constructions are the same as or similar to those of the content recorded on the storage medium. The binding information may be downloaded together with the downloaded content, via a network. The binding unit 400 may be stored in a local storage 260, and the binding information may be embodied as the manifest file 410 that contains information for verifying the binding unit 400.

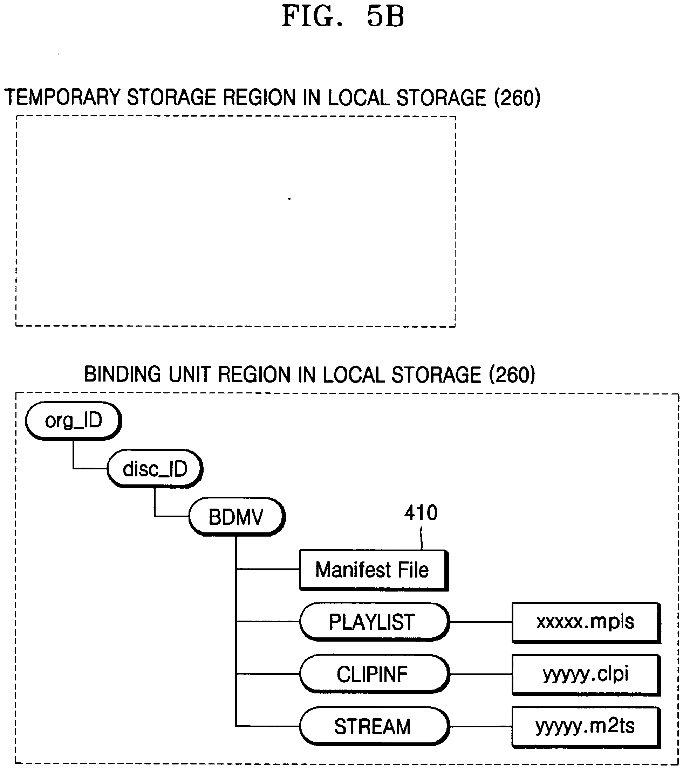

FIGS. 5A and 5B are reference diagrams illustrating a process of moving downloaded content to a binding unit region of a local storage according to an embodiment of the present invention. Specifically, FIGS. 5A and 5B respectively illustrate the constructions of a temporary storage region and a binding unit region within a local storage 260, as shown, for example, in FIG. 2, before and after the downloaded content data is moved to the binding unit region.

Referring to FIG. 5A, a Java™ application, for downloading, which is stored in the storage medium 250 having specific disc identification disc_ID, downloads content to the temporary storage region. A disc package stored in the storage medium 250, as shown in FIG. 2, and the binding unit 400, as shown in FIG. 4, in a local storage 260 arc used to produce a new virtual package, when an operation, such as title change, is performed. In this case, the binding unit 400 is preferably updated with a latest version before reproduction of the virtual package so that most recently downloaded content can be reflected into the virtual package. That is, when an operation, such as title change, is performed, a reproducing apparatus 200, as shown, for example, in FIG. 2, preferably updates the binding unit 400 in response to a command given from a specific Java™ application or a specific resident application, and then produces the virtual package.

The result of updating the binding unit 400 is illustrated in FIG. 5B. Referring to FIG. 5B, a manifest file 410, which is binding information downloaded and stored in the temporary storage region, and content are bound in the form of a virtual package. The virtual package is then stored in the binding unit region of the local storage 260. Thus, the reproducing apparatus 200 can reproduce content recorded on a storage medium 250 together with downloaded content, based on the virtual package in the binding unit region of the local storage 260.

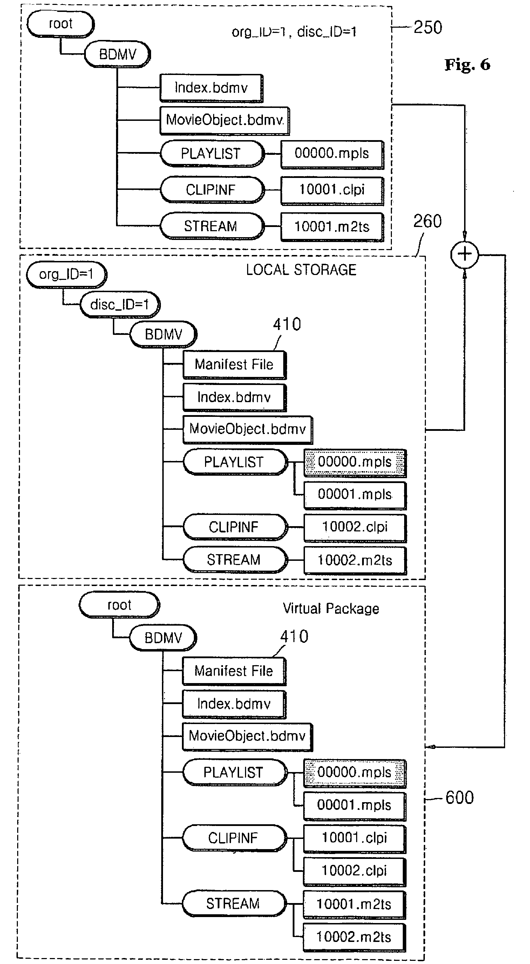

FIG. 6 is a reference diagram illustrating a process of producing a virtual package by binding content recorded on a storage medium with downloaded content, according to an embodiment of the present invention. In detail, FIG. 6 illustrates a whole process of producing a virtual package, using a disc package stored in the storage medium 250 and a binding unit 400 that is downloaded and stored in a local storage 260. More specifically, a binding unit 400 is stored in a separate space of the local storage 260 for each storage medium, in which the separate space is indicated with a studio identifier and/or a storage medium identifier. When title change or a move to a top menu occurs, a virtual package 600 is produced. Data stored in the local storage 260 is added into or substituted for data stored in the storage medium 250. For example, if a file that does not stored in the storage medium 250 is added into the data stored in the storage medium 250, and a file that has been stored in the storage medium 250 is overwritten. Referring to FIG. 6, the file named '00000.mpls' in the storage medium 250, such as a BD-ROM disc, is replaced with the file having the same name in the local storage 260 to produce the virtual package 600.

Although not shown in FIG. 6, not only one binding unit 400 for each storage medium but also a shared directory that can be shared in storage media manufactured in the same studio, may be present in the local storage 260. Thus, even if a storage medium identifier disc_ID for content in the shared directory is different from the disk identifier of a disc package, when their studio identifiers org_ID are the same, content stored in the shared directory and the disc package may be bound to produce a virtual package 600, as shown in FIG. 6.

Further, there may be a shared directory that can be shared in storage media whose studio identifiers org_ID are different. In this case, content stored in the shared directory and a storage medium 250 with a different studio identifier can be bound to produce a virtual package 600. It is assumed that there arc various cases where files having the same file name are present in a storage medium 250 (a), a binding unit 400 in a local storage 260 (b), a shared directory that can be shared in storage media having the same studio identifier org_ID (c), and a shared directory that can be shared in storage media having different studio identifiers org_ID (d). In this case, priority for binding is determined in the order of the files in the cases (b), (c), (d), and (a).

Meanwhile, the binding unit 400 stored in the local storage 260 includes a manifest file 410 that is binding information according to various embodiments of the present invention. The manifest file 410 may include binding information which will now be described.

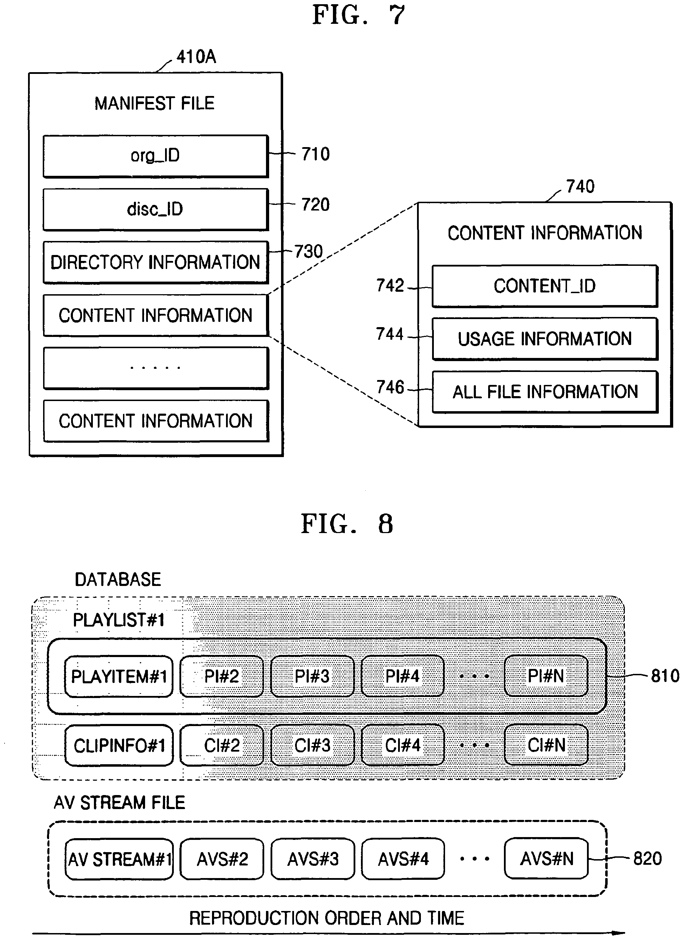

FIG. 7 is a diagram of an example manifest file 410A for producing a virtual package according to an embodiment of the present invention. Referring to FIG. 7, the manifest file 410A includes a studio identifier org_ID 710, and a storage medium identifier disc_ID 720 for verifying whether the manifest file 410A can be used for a storage medium 250. Also, the manifest file 410A includes directory information 730 for specifying whether a directory in which content files downloaded together with the manifest file 410A arc to be stored, is a binding unit region in a local storage 260, or whether the directory is present in a shared directory that can be shared in storage media having the same studio identifier org_ID or a shared directory that can be shared in information storage media having different studio identifiers org_ID. In addition, the manifest file 410A includes a plurality of content information 740 that constitute a binding unit. Otherwise, the plurality of the content information 740 may belong to title information.

The content information 740 may contain content identifier information (content_ID) 742 for distinguishing different content from each other, and usage information 744 for indicating the usage of the content. For instance, the content information 740 may contain usage information regarding the usage of content, e.g., Korcan text subtitles or Japanese text subtitles. Also, the content information 740 may contain information regarding all of content-related files. For instance, the content information 740 may specify a file name, data size, and version information regarding each of file, e.g., from the Index.bdmv file to the xxxxx.m2ts file, shown in FIG. 3, which constitutes content or a title. As described in connection with FIG. 7, the manifest file 410A contains information needed to bind the downloaded content and the content recorded on the storage medium 250 so that they can be reproduced together.

Accordingly, the manifest file 410A is preferably downloaded when content is downloaded through the Java™ application, for downloading, so that the manifest file 410A can include latest information. A directory of the local storage 260 to which data downloaded will be transferred from a temporary storage region, is preferably determined using the directory information of the manifest file 410A. Also, the manifest file 410A is used to determine whether the binding unit 400 is properly stored, when a disc package of the storage medium 250 and the binding unit 400 of the local storage 260 are bound together. That is, the content information 1740 of the manifest file 410A is preferably used to determine whether all of files for producing the binding unit 400 are properly downloaded.

Another embodiment of the present invention will now be described. This embodiment is an application of the above method in which content stored in a storage medium 250 and content stored in a local storage are bound to produce a virtual storage medium and the virtual storage medium is reproduced. A method according to the present embodiment is similar to content streaming, as follows.

The method according to the previous embodiment of the present invention is advantageous when content (an additional menu, a sub title, or etc.) whose data stream size is so small that it can be downloaded for a short time, is downloaded and bound with main video data stored in a storage medium 250.

However, when a large-sized content (a trailer introducing a new movie, or a commentary regarding a movie manufacturer or an actor) is downloaded, the method according to the previous embodiment requires a lot of time to store all of data regarding the content in a temporary storage region, and update a binding unit 400, as shown, for example, in FIG. 4, produce a virtual package 600, as shown, for example, in FIG. 6, and then perform a reproduction operation, when an operation, such as title change, occurs.

FIG. 8 is a diagram of an example progressive PlayList 810 for downloading and reproducing a part of an audio-visual (AV) stream file 820 according to an embodiment of the present invention. Referring to FIG. 8, in the case of a Java™ application that allows downloading of a progressive PlayList 810, a reproduction operation can start even if only a part of a large-sized stream file 820, which is to be first reproduced, is downloaded.

As shown in FIG. 8, when downloading of the progressive PlayList 810 and clip information files is completed, a binding operation is performed to produce a virtual package even if all of stream files, which are to be used for an actual reproduction operation, are not downloaded.

That is, when producing a virtual package 600 by updating a binding unit 400 using a progressive PlayList 810, the virtual package 600 must be produced even if all of stream files, i.e., m2ts files, are not present in the binding unit 400. Thus, additional information that distinguishes a binding operation using the progressive PlayList from a binding operation using a general PlayList file, is needed.

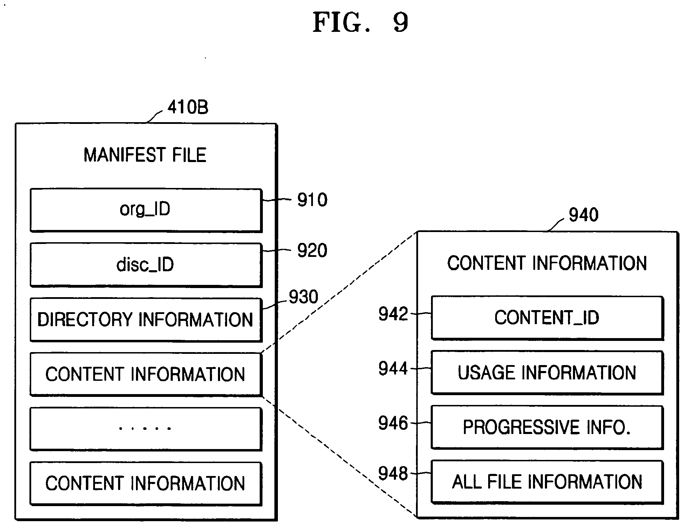

FIG. 9 is a diagram of an example manifest file 410B for reproducing a progressive PlayList according to an embodiment of the present invention. In detail, FIG. 9 illustrates the structure of the manifest file 410B used when producing a virtual package by binding a disk package of a storage medium and a binding unit in a local storage 260, as described above. Referring to FIG. 9, the manifest file 410B also includes a studio identifier org_ID 910; a storage medium identifier disc_ID 920 for verifying whether the manifest file 410B can be used for a storage medium 250; directory information 930 for specifying whether a directory in which content files downloaded together with the manifest file 410B are to be stored, is a binding unit region in a local storage 260, or whether the directory is present in a shared directory that can be shared in storage media having the same studio identifier org_ID or a shared directory that can be shared in information storage media having different studio identifiers org_ID; and a plurality of content information 940 that constitute a binding unit 400.

In addition, the manifest file 410B may further contain information indicating whether a virtual package will be reproduced even if stream files are not present when determining whether a binding unit is properly produced and the information is for a binding operation using a progressive PlayList. That is, progressive information is added into content information 940 included in the manifest file 410B, so that even if stream files are not present in a binding unit directory of a local storage 260, a virtual package 600 can be produced. All of files of corresponding content are data, for binding, in the form of a stream data.

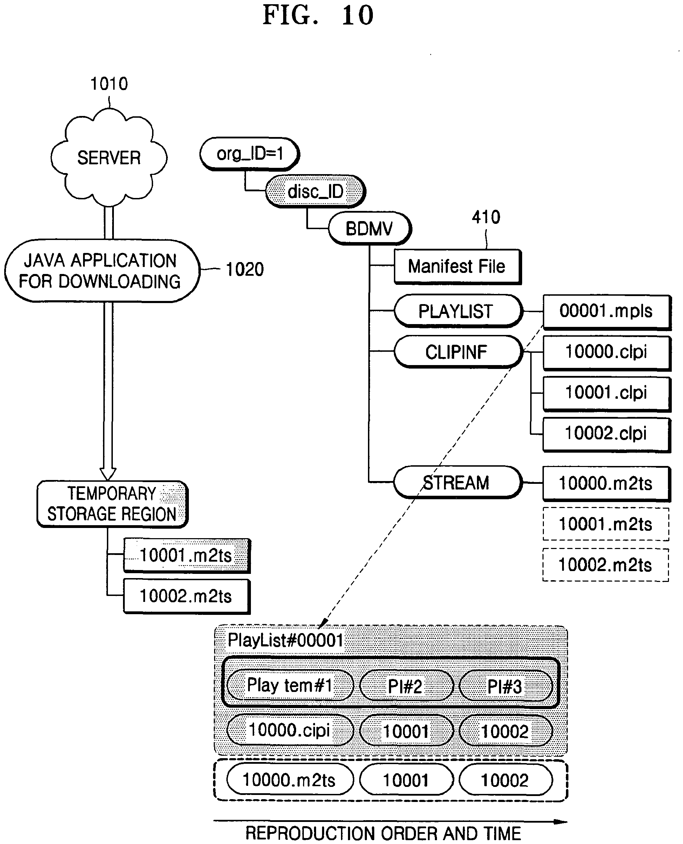

FIG. 10 is a diagram of an example binding unit update process using a progressive PlayList according to an embodiment of the present invention. Referring to FIG. 10, in the case of a binding operation using a progressive PlayList, once downloading of database files (PlayList files and clip information files) regarding video data is completed, a binding unit 400, as shown, for example, in FIG. 4, can be updated to produce a virtual package 600, as shown, for example, in FIG. 6, without stream files, such as m2ts files. Thus, during reproduction of the progressive PlayList, the other streams that have not yet to be downloaded are stored in a temporary storage region of a local storage 260 in an example reproducing apparatus 200, shown in FIG. 2, according to the Java™ application for downloading.

The binding unit update process described above with reference to FIGS. 5A and 5B is preferably performed prior to updating of a virtual package during title change or a changeover to a top menu. However, as shown in FIG. 10, since title change does not occur during reproduction of a progressive PlayList, it is impossible to move stream files stored in the temporary storage region to a binding unit data region. Therefore, when reproducing a progressive PlayList, the Java™ application for downloading may update a binding unit 400, via a binding update application program interface (API), concurrently with completing of downloading a stream file.

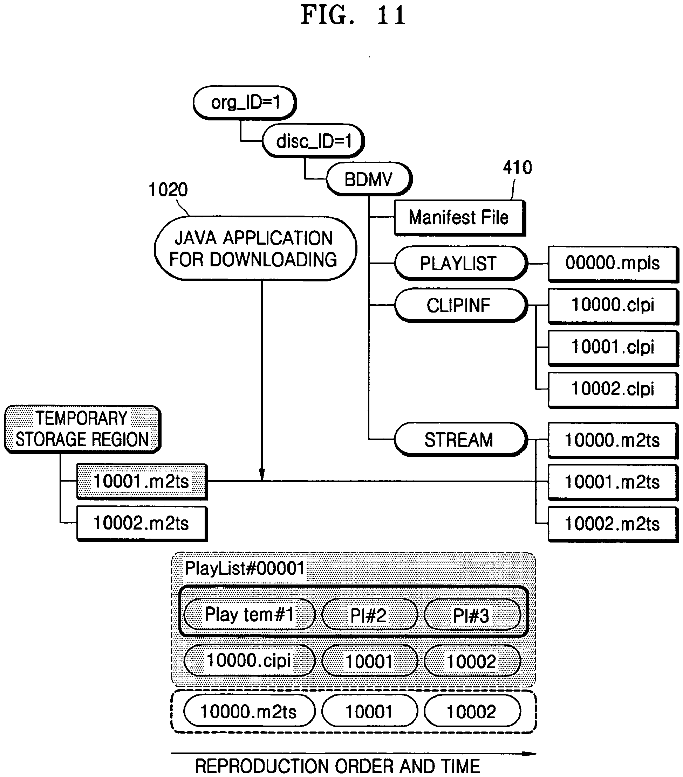

FIG. 11 is a diagram of a binding unit update process using a progressive PlayList according to another embodiment of the present invention. In detail, FIG. 11 illustrates a binding unit update process in which a stream file, the downloading of which is completed during reproduction of the progressive PlayList, is moved to a binding unit data region. That is, a binding unit 400, as shown, for example, in FIG. 4, is updated by performing a binding unit update API concurrently with completing downloading of a stream file, not during title change, under control of the Java™ application for downloading.

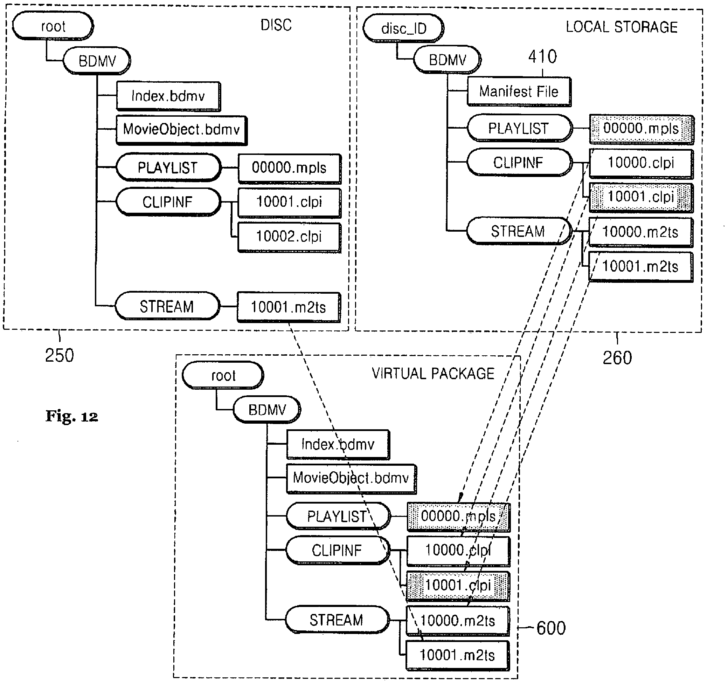

Meanwhile, reproduction of a progressive PlayList may cause the following problem. FIG. 12 is a diagram illustrating an example problem of a binding unit update process using a progressive PlayList according to an embodiment of the present invention. In detail, FIG. 12 illustrates a case where a PlayList file having the same name as a file in a storage medium 250 is downloaded using progressive properties according to the Java™ application for downloading. In this case, database files, such as PlayList files and clip information files, are reflected into a data region of a binding unit 400. Also, stream files are included into a binding unit region when downloading of each file is completed, according to a binding update API of the Java™ application.

However, as illustrated in FIG. 12, whether a file having the same name as a file in a local storage 260 is present in the storage medium 250, must be considered. Specifically, although a '10001.m2ts' file has yet to be downloaded in the local storage 260, since a '10001.m2ts' file is also present in the storage medium 250, virtual package 600 is produced using the '10001.m2ts' file present in the storage medium 250, without respect to a manufacturer's intention. Of course, before reproduction of the '10001.m2ts' file in the virtual package 600, which is copied from the storage medium 250, if downloading of a '10001.m2ts' file to the local storage 260, via a network 270, is completed and the binding unit data region is updated by performing a binding update API according to the Java™ application binding unit, any problem is not caused or can be avoided.

However, if reproduction of the '10001.m2ts' file in the storage medium 250 starts when downloading of the '10001.m2ts' file is not completed even after reproduction of the '10000.m2ts' file, downloading of a '10001.m2ts' file, via a network 270, is completed during the reproduction of the '10001.m2ts' file in the storage medium 250, and the binding update API is performed, updating of data that is currently being reproduced is caused, thereby preventing guaranteeing of proper content reproduction.

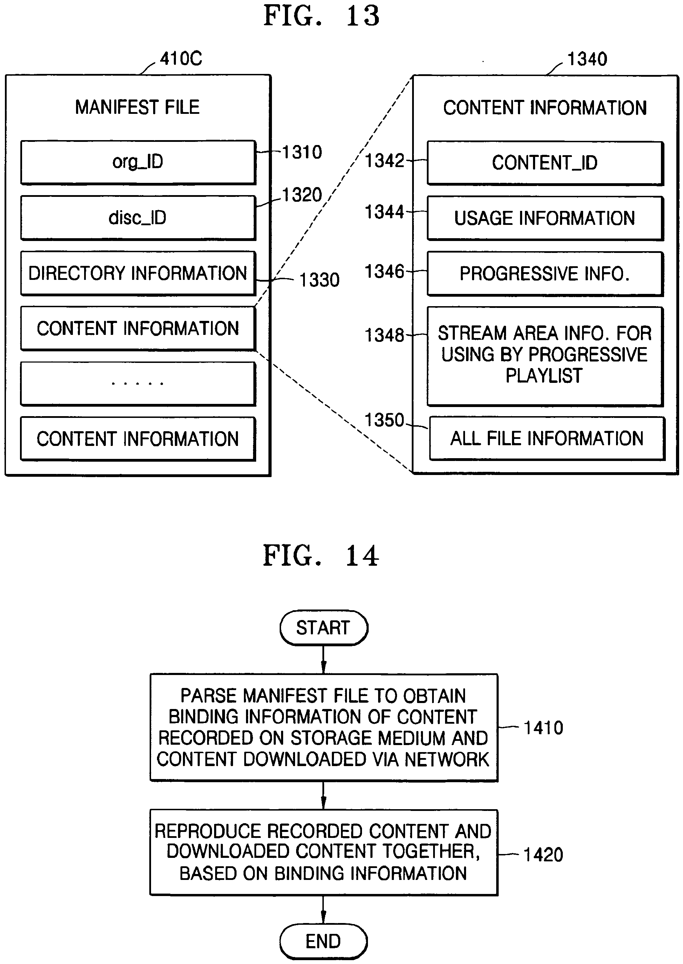

FIG. 13 is a diagram of an example manifest file 410C for solving the problem of the binding update process, according to another embodiment of the present invention. Referring to FIG. 13, the manifest file 410C also includes a studio identifier org_ID 1310; a storage medium identifier disc_ID 1320 for verifying whether the manifest file 410C can be used for a storage medium 250; directory information 1330 for specifying whether a directory in which content files downloaded together with the manifest file 410C are to be stored, is a binding unit region in a local storage 260, or whether the directory is present in a shared directory that can be shared in storage media having the same studio identifier org_ID or a shared directory that can be shared in information storage media having different studio identifiers org_ID; and a plurality of content information 1340 that constitute a binding unit 400. In addition, the manifest file 410C further contains additional information specifying the location of a stream file to be used by a progressive PlayList. That is, if the additional information specifies that a stream file to be used by a progressive PlayList file is stored in a local storage 260, even if a stream file having the same name as the stream file is also present in a storage medium 250, the stream file in the storage medium 250 is not reflected in producing a virtual package 600.

Also, when using a progressive PlayList, a user's operation mask UOP_mask may be allocated not to allow a trick play of a user input device in order to prevent reproduction of a PlayItem referring to a stream that has yet to be downloaded.

A method of reproducing content according to the present invention will now be described with reference to FIG. 14. FIG. 14 is a flowchart of a method of reproducing content according to an embodiment of the present invention. Referring to FIG. 14, first, a manifest file is parsed to obtain binding information of content recorded on a storage medium 250 and downloaded content, and the recorded content and the downloaded content are bound to produce a virtual package using the binding information at block 1410. Next, the recorded content and the downloaded content are reproduced together using the virtual package, based on the binding information at block 1420. Accordingly, it is possible to guarantee smooth reproduction of content recorded on a storage medium together with content downloaded, via a network.

The present invention can be realized as a computer readable program, and code and code segments of the program can be easily derived by computer programmers in the technical field to which the present invention pertains. Also, when the program is stored in a computer readable medium and executed in a computer, a method of binding data stored in a storage medium and a local storage and reproducing the binding result is performed. The computer readable medium may be any medium, such as a magnetic recording medium, an optical recording medium, and a carrier wave medium. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable medium can also be distributed over network coupled computer systems so that the computer readable code is stored and executed in a distributed fashion.

While this invention has been particularly shown and described with reference to exemplary embodiments thereof, it will be understood by those skilled in the art that various changes in form and details may be made therein without departing from the spirit and scope of the invention. For example, any computer readable media or data storage devices may be utilized, as long as the manifest file is included in the manner shown in FIG. 4 through FIG. 14. In addition, manifest files can also be configured differently as shown in FIG. 7, FIG. 9 and FIG. 13. Moreover, a reproducing apparatus as shown in FIG. 2 can be implemented as part of a recording apparatus, or alternatively a single apparatus for performing recording and/or reproducing functions with respect to a storage medium. Similarly, the CPU can be implemented as a chipset having firmware, or alternatively, a general or special purposed computer programmed to perform the methods as described, for example, with reference to FIG. 14. Accordingly, it is intended, therefore, that the present invention not be limited to the various example embodiments disclosed, but that the present invention includes all embodiments falling within the scope of the appended claims.

## Claims

1. A method for reproducing content stored according to a predefined data structure in a storage medium, the storage medium having a studio identifier and storage medium identifier, said method comprising:
downloading content together with binding information via a network from an external server to a temporary storage region in a local storage of a reproducing apparatus, said binding information being a manifest file containing information for storing a binding unit in the local storage and information for verifying the binding unit;
transferring the downloaded content from the temporary storage to a directory in a binding unit region of the local storage using directory information of the manifest file for forming the binding unit, or updating a predetermined binding unit stored in said binding unit region using the downloaded content, wherein the binding unit region is a separate space of the local storage indicated with the studio identifier and/or the storage medium identifier, wherein said directory information is for storing said downloaded content in specific directories of the local storage and for specifying whether a directory in which downloaded content files of said content together with the manifest file are to be stored is the binding unit region in the local storage or whether the directory is present in a shared directory that can be shared in storage media having the same studio identifier or a shared directory that can be shared in storage media having different studio identifiers, and wherein the file and directory structure of the binding unit is the same as the predefined data structure of the content stored on the storage medium;
producing a virtual package by binding a disc package, which is a bundle of all content recorded on the storage medium, with the binding unit, based on the binding information, said virtual package having a structure that is the same as the predefined data structure of the storage medium, and wherein the virtual package is produced to contain only information regarding links, via which files stored in the storage medium and the binding unit are read, and stored in a task memory in the reproducing apparatus;
reproducing the content stored on the storage medium together with the downloaded content using the virtual package.

2. The method as claimed in claim 1, wherein the virtual package is produced by updating said binding unit stored in a local storage by using the downloaded content, prior to the production of the virtual package.

3. The method as claimed in claim 2, wherein, in order to identify the binding unit, the binding information comprises a studio identifier and/or a storage medium identifier for verifying whether the binding information can be used for a storage medium.

4. The method as claimed in claim 2, wherein the binding information further comprises an identifier for identifying a title unit or a content unit in order that the downloaded content is divided in the title units or the content units for content management.

5. The method as claimed in claim 4, wherein the binding information further comprises information about usage of the title units or the content units.

6. The method as claimed in claim 4, wherein the binding information further comprises information about all of data files for the title unit or the content unit.

7. The method as claimed in claim 6, wherein the information about all of the data files specifies names, sizes, or versions of the data files, or all of the names, sizes, and versions of the data files.

8. The method as claimed in claim 1, wherein the binding information further comprises information indicating whether a progressive function is to be allowed to update the binding unit and produce the virtual package even if the downloaded content does not include all stream files.

9. The method as claimed in claim 8, wherein, when the progressive function is allowed, the binding information further comprises information indicating whether a stream file referred to by a PlayList is stored in the storage medium or a binding unit region of the local storage.

10. The method as claimed in claim 8, wherein, when the progressive function is allowed, a user's operation mask is allocated in order not to allow a trick play function via a user interface.

11. An apparatus for reproducing content stored according to a predefined data structure in a storage medium, the storage medium having a studio identifier and storage medium identifier, the apparatus comprising:
a local storage manager for managing the download of content together with binding information via a network from an external server to a temporary storage region in a local storage of the reproducing apparatus, said binding information being a manifest file containing information for storing a binding unit in the local storage and information for verifying the binding unit,
a manifest manager for producing a virtual package by binding a disc package, which is a bundle of all content recorded on the storage medium, with the binding unit, based on the binding information, said virtual package having a structure that is the same as the predefined data structure of the storage medium, and wherein the virtual package is produced to contain only information regarding links, via which files stored in the storage medium and the binding unit are read, and stored in a task memory in the reproducing apparatus, wherein said binding unit is obtained by transferring the downloaded content from the temporary storage to a directory in a binding unit region of the local storage using directory information of the manifest file, or updating a predetermined binding unit stored in said binding unit region using the downloaded content, wherein the binding unit region is a separate space of the local storage indicated with the studio identifier and/or the storage medium identifier, wherein said directory information is for storing said downloaded content in specific directories of the local storage and for specifying whether a directory in which downloaded content files of said content together with the manifest file are to be stored is the binding unit region in the local storage or whether the directory is present in a shared directory that can be shared in storage media having the same studio identifier or a shared directory that can be shared in storage media having different studio identifiers, and wherein the file and directory structure of the binding unit is the same as the predefined data structure of the content stored on the storage medium; and
a reproducing unit for reproducing the content stored on the storage medium together with the downloaded content using the virtual package.

12. The apparatus as claimed in claim 11, wherein the manifest manager updates a predetermined binding unit stored in a local storage by using the downloaded content, prior to the production of the virtual package.

13. The apparatus as claimed in claim 12, wherein the binding information further comprises information indicating whether a progressive function is to be allowed to update the binding unit and produce the virtual package even if the downloaded content does not include all stream files.

14. The apparatus as claimed in claim 13, wherein, when the progressive function is allowed, the binding information further comprises information indicating whether a stream file referred to by a PlayList is recorded on the storage medium or a binding unit region of the local storage.

15. The apparatus as claimed in claim 12, wherein the manifest manager allows a progressive function to be performed to update the binding unit and produce the virtual package, even if the downloaded content does not contain all stream files.

## Patentansprüche

1. Verfahren zur Wiedergabe von Inhalt, der in Übereinstimmung mit einer vordefinierten Datenstruktur in einem Speichermedium gespeichert ist, wobei das Speichermedium einen Studioidentifikator und einen Speichermediumidentifikator aufweist, wobei das Verfahren umfasst:
Herunterladen von Inhalt zusammen mit Bindungsinformationen via ein Netzwerk von einem externen Server zu einer Region temporärer Speicherung in einem lokalen Speicher einer Wiedergabevorrichtung, wobei die Bindungsinformationen in einer Manifest-Datei bestehen, die Informationen zum Speichern einer Bindungseinheit im lokalen Speicher und Informationen zum Überprüfen der Bindungseinheit enthält;
Überführen des heruntergeladenen Inhalts von der Region temporärer Speicherung zu einem Verzeichnis in einer Bindungseinheitregion des lokalen Speichers unter Verwendung von Verzeichnisinformationen der Manifest-Datei zwecks Bildung der Bindungseinheit, oder Aktualisieren einer vorgegebenen Bindungseinheit, die in der Bindungseinheitregion gespeichert ist, unter Verwendung des heruntergeladenen Inhalts, wobei die Bindungseinheitregion ein separater Raum des lokalen Speichers ist, der mit dem Studioidentifikator und / oder dem Speichermediumidentifikator angegeben wird, wobei die Verzeichnisinformationen dienen zum Speichern des heruntergeladenen Inhalts in spezifischen Verzeichnissen des lokalen Speichers und zum Spezifizieren, ob ein Verzeichnis, in welchem heruntergeladene Inhaltsdateien des Inhalts zusammen mit der Manifest-Datei gespeichert werden sollen, die Bindungseinheitregion im lokalen Speicher ist oder ob das Verzeichnis vorhanden ist in einem gemeinsamen Verzeichnis, das bei Speichermedien mit dem gleichen Studioidentifikator gemeinsam genutzt werden kann, oder einem gemeinsamen Verzeichnis, das bei Speichermedien mit verschiedenen Studioidentifikatoren gemeinsam genutzt werden kann, und wobei die Datei- und Verzeichnisstruktur der Bindungseinheit die gleiche ist wie die vordefinierte Datenstruktur des auf dem Speichermedium gespeicherten Inhalts;
Herstellen eines virtuellen Pakets durch Verbinden eines Discpakets, das in einem Bündel aus dem gesamten auf dem Speichermedium aufgezeichneten Inhalt besteht, mit der Bindungseinheit, auf Grundlage der Bindungsinformationen, wobei das virtuelle Paket eine Struktur aufweist, die die gleiche ist wie die vordefinierte Datenstruktur des Speichermediums, und wobei das virtuelle Paket so hergestellt wird, dass es nur Informationen bezüglich Links enthält, via die im Speichermedium und der Bindungseinheit gespeicherte Dateien gelesen werden, und in einem Aufgabenspeicher in der Wiedergabevorrichtung gespeichert wird;
Wiedergeben des auf dem Speichermedium gespeicherten Inhalts zusammen mit dem heruntergeladenen Inhalt unter Verwendung des virtuellen Pakets.

2. Verfahren nach Anspruch 1, wobei das virtuelle Paket hergestellt wird durch Aktualisieren der in einem lokalen Speicher gespeicherten Bindungseinheit durch Verwenden des heruntergeladenen Inhalts, vor der Herstellung des virtuellen Pakets.

3. Verfahren nach Anspruch 2, wobei, um die Bindungseinheit zu identifizieren, die Bindungsinformationen einen Studioidentifikator und / oder einen Speichermediumidentifikator umfassen zwecks Überprüfung, ob die Bindungsinformationen für ein Speichermedium verwendet werden können.

4. Verfahren nach Anspruch 2, wobei die Bindungsinformationen weiterhin einen Identifikator zum Identifizieren einer Titeleinheit oder einer Inhaltseinheit umfassen, damit der heruntergeladene Inhalt in die Titeleinheiten oder die Inhaltseinheiten für Inhaltsverwaltung eingeteilt wird.

5. Verfahren nach Anspruch 4, wobei die Bindungsinformationen weiterhin Informationen über Verwendung der Titeleinheiten oder der Inhaltseinheiten umfassen.

6. Verfahren nach Anspruch 4, wobei die Bindungsinformationen weiterhin Informationen über alle Datendateien für die Titeleinheit oder die Inhaltseinheit umfassen.

7. Verfahren nach Anspruch 6, wobei die Informationen über alle der Datendateien Namen, Größen oder Versionen der Datendateien oder alle der Namen, Größen und Versionen der Datendateien spezifizieren.

8. Verfahren nach Anspruch 1, wobei die Bindungsinformationen weiterhin Informationen umfassen, die angeben, ob eine progressive Funktion zugelassen werden soll, um die Bindungseinheit zu aktualisieren und das virtuelle Paket herzustellen, selbst wenn der heruntergeladene Inhalt nicht alle Stream-Dateien einschließt.

9. Verfahren nach Anspruch 8, wobei, wenn die progressive Funktion zugelassen wird, die Bindungsinformationen weiterhin Informationen umfassen, die angeben, ob eine Stream-Datei, auf die von einer PlayList Bezug genommen wird, in dem Speichermedium oder einer Bindungseinheitregion des lokalen Speichers gespeichert ist.

10. Verfahren nach Anspruch 8, wobei, wenn die progressive Funktion zugelassen wird, eine Benutzerbedienmaske bereitgestellt wird, um eine Trick-Play-Funktion via eine Benutzerschnittstelle nicht zuzulassen.

11. Vorrichtung zur Wiedergabe von Inhalt, der in Übereinstimmung mit einer vordefinierten Datenstruktur in einem Speichermedium gespeichert ist, wobei das Speichermedium einen Studioidentifikator und einen Speichermediumidentifikator aufweist, wobei die Vorrichtung umfasst:
einen Lokalspeicherverwalter zum Verwalten des Herunterladens von Inhalt zusammen mit Bindungsinformationen via ein Netzwerk von einem externen Server zu einer Region temporärer Speicherung in einem lokalen Speicher der Wiedergabevorrichtung, wobei die Bindungsinformationen in einer Manifest-Datei bestehen, die Informationen zum Speichern einer Bindungseinheit im lokalen Speicher und Informationen zum Überprüfen der Bindungseinheit enthält,
einen Manifest-Verwalter zum Herstellen eines virtuellen Pakets durch Verbinden eines Discpakets, das besteht in einem Bündel aus dem gesamten auf dem Speichermedium aufgezeichneten Inhalt, mit der Bindungseinheit, auf Grundlage der Bindungsinformationen, wobei das virtuelle Paket eine Struktur aufweist, die die gleiche ist wie die vordefinierte Datenstruktur des Speichermediums, und wobei das virtuelle Paket so hergestellt wird, dass es nur Informationen bezüglich Links enthält, via die in dem Speichermedium und der Bindungseinheit gespeicherte Dateien gelesen werden, und in einem Aufgabenspeicher in der Wiedergabevorrichtung gespeichert wird, wobei die Bindungseinheit erhalten wird durch Überführen des heruntergeladenen Inhalts von der Region temporärer Speicherung zu einem Verzeichnis in einer Bindungseinheitregion des lokalen Speichers unter Verwendung von Verzeichnisinformationen der Manifest-Datei, oder Aktualisieren einer vorgegebenen Bindungseinheit, die in der Bindungseinheitregion gespeichert ist, unter Verwendung des heruntergeladenen Inhalts, wobei die Bindungseinheitregion ein separater Raum des lokalen Speichers ist, der mit dem Studioidentifikator und / oder dem Speichermediumidentifikator angegeben wird, wobei die Verzeichnisinformationen dienen zum Speichern des heruntergeladenen Inhalts in spezifischen Verzeichnissen des lokalen Speichers und zum Spezifizieren, ob ein Verzeichnis, in welchem heruntergeladene Inhaltsdateien des Inhalts zusammen mit der Manifest-Datei gespeichert werden sollen, die Bindungseinheitregion im lokalen Speicher ist oder ob das Verzeichnis vorhanden ist in einem gemeinsamen Verzeichnis, das bei Speichermedien mit dem gleichen Studioidentifikator gemeinsam genutzt werden kann, oder einem gemeinsamen Verzeichnis, das bei Speichermedien mit verschiedenen Studioidentifikatoren gemeinsam genutzt werden kann, und wobei die Datei- und Verzeichnisstruktur der Bindungseinheit die gleiche ist wie die vordefinierte Datenstruktur des auf dem Speichermedium gespeicherten Inhalts; und
eine Wiedergabeeinheit zum Wiedergeben des auf dem Speichermedium gespeicherten Inhalts zusammen mit dem heruntergeladenen Inhalt unter Verwendung des virtuellen Pakets.

12. Vorrichtung nach Anspruch 11, wobei der Manifest-Verwalter eine vorgegebene Bindungseinheit, die in einem lokalen Speicher gespeichert ist, durch Verwenden des heruntergeladenen Inhalts aktualisiert, vor der Herstellung des virtuellen Pakets.

13. Vorrichtung nach Anspruch 12, wobei die Bindungsinformationen weiterhin Informationen umfassen, die angeben, ob eine progressive Funktion zugelassen werden soll, um die Bindungseinheit zu aktualisieren und das virtuelle Paket herzustellen, selbst wenn der heruntergeladene Inhalt nicht alle Stream-Dateien einschließt.

14. Vorrichtung nach Anspruch 13, wobei, wenn die progressive Funktion zugelassen wird, die Bindungsinformationen weiterhin Informationen umfassen, die angeben, ob eine Stream-Datei, auf die von einer PlayList Bezug genommen wird, auf dem Speichermedium oder einer Bindungseinheitregion des lokalen Speichers gespeichert ist.

15. Vorrichtung nach Anspruch 12, wobei der Manifest-Verwalter zulässt, dass eine progressive Funktion durchgeführt wird, um die Bindungseinheit zu aktualisieren und das virtuelle Paket herzustellen, selbst wenn der heruntergeladene Inhalt nicht alle Stream-Dateien enthält.

## Revendications

1. Procédé de restitution d'un contenu enregistré conformément à une structure de données prédéfinie dans un support d'enregistrement, le support d'enregistrement possédant un identifiant de studio et un identifiant de support d'enregistrement, ledit procédé comprenant :
le téléchargement d'un contenu, conjointement à des informations de liaison, par l'intermédiaire d'un réseau, à partir d'un serveur externe vers une zone de mémorisation temporaire d'un dispositif de mémorisation local d'un appareil de restitution, lesdites informations de liaison consistant en un fichier manifeste contenant des informations permettant la mémorisation d'une unité de liaison dans le dispositif de mémorisation local et des informations permettant de vérifier l'unité de liaison ;
le transfert du contenu téléchargé, depuis la zone de mémorisation temporaire vers un répertoire d'une zone d'unité de liaison du dispositif de mémorisation local, en utilisant les informations de répertoire du fichier manifeste pour former l'unité de liaison, ou l'actualisation d'une unité de liaison prédéterminée stockée dans ladite zone d'unité de liaison en utilisant le contenu téléchargé ;
la zone d'unité de liaison consistant en un espace distinct du dispositif de mémorisation local indiqué par l'identifiant de studio et/ou l'identifiant de support d'enregistrement ; lesdites informations de répertoire servant à la mémorisation dudit contenu téléchargé dans des répertoires spécifiques du dispositif de mémorisation local et permettant de préciser si un répertoire dans lequel doivent être enregistrés des fichiers de contenu téléchargés dudit contenu conjointement au fichier manifeste consiste en la zone d'unité de liaison du dispositif de mémorisation local ou si le répertoire est présent dans un répertoire commun pouvant être partagé dans des supports d'enregistrement présentant le même identifiant de studio ou
dans un répertoire commun pouvant être partagé dans des supports d'enregistrement présentant des identifiants de studio différents ; et la structure des fichiers et du répertoire de l'unité de liaison étant la même que la structure de données prédéfinie du contenu enregistré sur le support d'enregistrement ;
la production d'un paquet virtuel en liant un paquet de disque, consistant en l'ensemble intégral du contenu enregistré sur le support d'enregistrement, à l'unité de liaison, sur la base des informations de liaison, ledit paquet virtuel ayant une structure identique à la structure de données prédéfinie du support d'enregistrement, et le paquet virtuel étant produit pour contenir uniquement des informations concernant des liens par l'intermédiaire desquels les fichiers enregistrés dans le support d'enregistrement et l'unité de liaison sont lus et mémorisés dans une mémoire de tâches de l'appareil de restitution ; et
la restitution du contenu enregistré sur le support d'enregistrement conjointement au contenu téléchargé en utilisant le paquet virtuel.

2. Procédé selon la revendication 1, dans lequel le paquet virtuel est produit en actualisant ladite unité de liaison stockée dans un dispositif de mémorisation local en utilisant le contenu téléchargé, préalablement à la production du paquet virtuel.

3. Procédé selon la revendication 2, dans lequel, pour pouvoir identifier l'unité de liaison, les informations de liaison comprennent un identifiant de studio et/ou un identifiant de support d'enregistrement permettant de vérifier si les informations de liaison peuvent être utilisées pour un support d'enregistrement.

4. Procédé selon la revendication 2, dans lequel les informations de liaison comprennent en outre un identifiant permettant d'identifier une unité de titre ou une unité de contenu pour que le contenu téléchargé puisse être divisé en les unités de titre ou les unités de contenu en vue de la gestion du contenu.

5. Procédé selon la revendication 4, dans lequel les informations de liaison comprennent en outre des informations relatives à l'usage des unités de titre ou des unités de contenu.

6. Procédé selon la revendication 4, dans lequel les informations de liaison comprennent en outre des informations relatives à l'intégralité des fichiers de données quant à l'unité de titre ou l'unité de contenu.

7. Procédé selon la revendication 6, dans lequel les informations relatives à l'intégralité des fichiers de données précisent le nom, la taille ou la version des fichiers de données, ou l'intégralité des noms, tailles et versions des fichiers de données.

8. Procédé selon la revendication 1, dans lequel les informations de liaison comprennent en outre des informations indiquant si une fonction progressive doit être permise pour actualiser l'unité de liaison et produire le paquet virtuel même si le contenu téléchargé ne comprend pas tous les fichiers de contenu multimédia.

9. Procédé selon la revendication 8, dans lequel, lorsque la fonction progressive est permise, les informations de liaison comprennent en outre des informations indiquant si un fichier de contenu multimédia désigné par une Liste d'écoute (PlayList) est enregistré dans le support d'enregistrement ou une zone d'unité de liaison du dispositif de mémorisation local.

10. Procédé selon la revendication 8, dans lequel, lorsque la fonction progressive est permise, il est alloué un masque de fonctionnement d'utilisateur visant à ne pas autoriser une fonction de lecture accélérée par l'intermédiaire d'une interface utilisateur.

11. Appareil de restitution de contenu enregistré conformément à une structure de données prédéfinie dans un support d'enregistrement, le support d'enregistrement possédant un identifiant de studio et un identifiant de support d'enregistrement, l'appareil comprenant :
un gestionnaire de dispositif de mémorisation local destiné à gérer le téléchargement d'un contenu, conjointement à des informations de liaison, par l'intermédiaire d'un réseau, à partir d'un serveur externe vers une zone de mémorisation temporaire d'un dispositif de mémorisation local de l'appareil de restitution, lesdites informations de liaison consistant en un fichier manifeste contenant des informations permettant la mémorisation de l'unité de liaison dans le dispositif de mémorisation local et des informations permettant de vérifier l'unité de liaison,
un gestionnaire manifeste destiné à produire un paquet virtuel en liant un paquet de disque, consistant en l'ensemble intégral du contenu enregistré sur le support d'enregistrement, à l'unité de liaison, sur la base des informations de liaison, ledit paquet virtuel ayant une structure identique à la structure de données prédéfinie du support d'enregistrement, et le paquet virtuel étant produit pour contenir uniquement des informations concernant des liens par l'intermédiaire desquels les fichiers enregistrés dans le support d'enregistrement et l'unité de liaison sont lus et mémorisés dans une mémoire de tâches de l'appareil de restitution ; ladite unité de liaison étant obtenue par transfert du contenu téléchargé, depuis la zone de mémorisation vers un répertoire d'une zone d'unité de liaison du dispositif de mémorisation local, en utilisant les informations de répertoire du fichier manifeste, ou par actualisation d'une unité de liaison prédéterminée stockée dans ladite zone d'unité de liaison en utilisant le contenu téléchargé, la zone d'unité de liaison consistant en un espace distinct du dispositif de mémorisation local indiqué par l'identifiant de studio et/ou l'identifiant de support d'enregistrement, lesdites informations de répertoire servant à la mémorisation dudit contenu téléchargé dans des répertoires spécifiques du dispositif de mémorisation local et permettant de spécifier si un répertoire dans lequel doivent être enregistrés des fichiers de contenu téléchargés dudit contenu conjointement au fichier manifeste consiste en la zone d'unité de liaison du dispositif de mémorisation local ou si le répertoire est présent dans un répertoire commun pouvant être partagé dans des supports d'enregistrement présentant le même identifiant de studio ou dans un répertoire commun pouvant être partagé dans des supports d'enregistrement présentant des identifiants de studio différents ; et la structure des fichiers et du répertoire de l'unité de liaison est la même que la structure de données prédéfinie du contenu enregistré sur le support d'enregistrement ; et
une unité de restitution destinée à restituer le contenu enregistré sur le support d'enregistrement conjointement au contenu téléchargé en utiliser le paquet virtuel.

12. Appareil selon la revendication 11, dans lequel le gestionnaire manifeste actualise une unité de liaison prédéterminée d'un dispositif de mémorisation local en utilisant le contenu téléchargé, préalablement à la production du paquet virtuel.

13. Appareil selon la revendication 12, dans lequel les informations de liaison comprennent en outre des informations indiquant si une fonction progressive doit être permise pour actualiser l'unité de liaison et produire le paquet virtuel même si le contenu téléchargé ne comprend pas tous les fichiers de contenu multimédia.

14. Appareil selon la revendication 13, dans lequel, lorsque la fonction progressive est permise, les informations de liaison comprennent en outre des informations indiquant si un fichier de contenu multimédia désigné par une Liste d'écoute (PlayList) est enregistré sur le support d'enregistrement ou une zone d'unité de liaison du dispositif de mémorisation local.

15. Appareil selon la revendication 12, dans lequel le gestionnaire manifeste permet la réalisation d'une fonction progressive visant à actualiser l'unité de liaison et à produire le paquet virtuel, même si le contenu téléchargé ne contient pas tous les fichiers de contenu multimédia.
